# EUROPÄISCHE PATENTANMELDUNG

(11) **EP 1 132 742 A2**
(43) Veröffentlichungstag der Anmeldung: **12.09.2001**
(21) Anmeldenummer: 01104703.2
(22) Anmeldetag: 26.02.2001
(51) Int. Cl.: G01P 5/14

(54) **Nichtlinearer Druck-zu-Linearfrequenz-Wandler mit Lineardruck-zu-Spannung-Sensoren in Mikrokontroller-Technologie**

(30) Priorität: 03.03.2000 US 518443
(71) Anmelder: Mannesmann VDO AG, 60388 Frankfurt am Main (DE)
(72) Erfinder: Reaves III, Samuel H., Stephens City, VA 22655 (US); Gharagozloo, Mahmood, Winchester, VA 22601 (US)
(74) Vertreter: Rassler, Andrea, Dipl.-Phys.

(57) **Zusammenfassung**

Um die naturgemäße Nichtlinearität der Druck/Geschwindigkeits-Messung auszugleichen, wurde ein Elektronikmodul entwickelt, das das nichtlineare Drucksignal aus dem analogen Drucksensor in ein lineares Frequenzsignal umsetzt. Bei einer bevorzugten Ausführungsform der vorliegenden Erfindung wird ein Mikrokontroller mit Analog/Digital-Verarbeitungsfähigkeiten verwendet, um ein nichtlineares Drucksignal in ein lineares Frequenzsignal umzusetzen. Unter Mikroprogrammsteuerung liest der Mikrokontroller das Analogsignal aus dem Sensor und berechnet die erforderlichen Programmkonstanten zur Erzeugung einer linearen Ausgangsfrequenz. Somit entfernt die vorliegende Erfindung die quadratische Ansprechbeziehung von Geschwindigkeit zu Druck in der Gleichung: Druck = (Geschwindigkeit/8,208)^2. Deshalb kann ein beliebiger standardmäßiger analoger oder digitaler Geschwindigkeitsmesser mit Frequenzeingang in Verbindung mit nichtlinearen Drucksensoren verwendet werden. Bei einer bevorzugten Ausführungsform werden zwei analoge Sensoren für den Geschwindigkeitseingang verwendet, wobei ein Eingangssignal auf der Grundlage eines entweder vom Mikrokontroller oder der Bedienungsperson wählbaren Schalters von einem oder dem anderen der beiden Sensoren empfangen wird.

## Beschreibung

Die vorliegende Erfindung betrifft allgemein Sensoren mit nichtlinearem Druckeingangssignal und insbesondere Sensoren, die ein nichtlineares Druckeingangssignal aus einem Pitot-Staudüsenaufnehmer empfangen.

Es ist häufig notwendig, nichtlineare Druckeingangsmessungen zu verwenden, um Informationen zu erhalten, die am besten auf einem linearen Anzeiger ausgegeben werden. Zum Beispiel ist es bei Marinenanwendungen vorteilhaft, die Geschwindigkeit eines Schiffs mit einem nichtlinearen Druckanzeiger zu messen. Die Geschwindigkeit des Schiffs kann von der Bedienungsperson jedoch leichter auf einem linearen Anzeiger als auf einem nichtlinearen Anzeiger abgelesen werden.

Meßverfahren für nichtlineare Druckeingangssignale, die zur Zeit verwendet werden, umfassen mechanische Bourdon-Federrohr-Analoganzeiger, die eine Pitot-Staudüse als Druckeingang verwenden. Der in der Pitot-Staudüse entwickelte Druck wird an einen hochauflösenden Lineardrucksensor angelegt, der den Druck in eine analoge Spannung umsetzt, die dann in ein Frequenzausgangssignal umgesetzt wird. Bei Anwendungen wie zum Beispiel Schiffsgeschwindigkeitsmessern führt dies jedoch zu einer nichtlinearen Anzeigerskala.

Bei einem solchen Pitot/Frequenz-Umsetzer hängt der Druck über die folgende Formel mit der Geschwindigkeit zusammen: Druck = (Geschwindigkeit/8,208)^2. Da die Beziehung zwischen der Geschwindigkeit und dem Druck einen nichtlinearen Term (Geschwindigkeit^2) enthält, können standardmäßige analoge elektronische Umsetzungsverfahren nicht ohne weiteres oder wirtschaftlich zur Ansteuerung eines Geschwindigkeitsmessers mit Linearskala verwendet werden.

Weitere Notwendigkeiten werden bei weiterer Durchsicht der folgenden ausführlichen Beschreibung in Verbindung mit den Zeichnungen deutlich.

Die vorliegende Erfindung wird zur Umsetzung eines Drucksensorausgangssignals, das zwischen 0 Volt und 5 Volt liegt, in eine lineare Frequenz verwendet. Diese Frequenz kann dann als ein Geschwindigkeitseingangssignal für einen Geschwindigkeitsmesser oder ein Instrumentencluster zur Anzeige der Geschwindigkeit verwendet werden.

Um die naturgemäße Nichtlinearität der Umsetzung von Geschwindigkeit in Druck auszugleichen, wurde ein Elektronikmodul entwickelt, das das nichtlineare Drucksignal aus dem analogen Drucksensor in ein lineares Frequenzsignal umsetzt. Bei einer bevorzugten Ausführungsform der vorliegenden Erfindung wird zur Durchführung der Umsetzung ein Mikrokontroller mit Analog/Digital-Umsetzer ("ADC") verwendet. Unter Mikroprogrammsteuerung liest der Mikrokontroller das Analogsignal aus dem Sensor und berechnet die erforderlichen Programmkonstanten zur Erzeugung einer linearen Ausgangsfrequenz. Somit entfernt die vorliegende Erfindung die quadratische Ansprechbeziehung von Geschwindigkeit zu Druck in der Gleichung: Druck = (Geschwindigkeit/8,208)^2. Die Ausgangsfrequenz wird so skaliert, daß sie bei 10.800 Impulsen pro Meile oder 3 Hertz pro Meile pro Stunde liegt. Dieses Ausgangssignal kann als ein Geschwindigkeitseingangssignal für einen Geschwindigkeitsmesser oder ein Instrumentencluster zur Anzeige der Geschwindigkeit verwendet werden. Deshalb kann ein beliebiger standardmäßiger analoger oder digitaler Geschwindigkeitsmesser mit Frequenzeingang in Verbindung mit einer nichtlinearen Druckmessung verwendet werden. Bei einer bevorzugten Ausführungsform werden zwei analoge Sensoren als Geschwindigkeitseingang verwendet, wobei das Eingangssignal auf der Grundlage eines entweder vom Mikrokontroller oder der Bedienungsperson wählbaren Schalters von einem oder dem anderen der beiden Sensoren empfangen wird.

Das Eingangssignal für den Mikrokontroller stammt bei der bevorzugten Ausführungsform aus dem ADC, der das analoge Ausgangssignal des Drucksensors in ein Digitalsignal umsetzt, das in den Mikrokontroller eingegeben wird. Der resultierende digitalisierte Wert wird als eine Eingangsvariable zur Berechnung einer Mikroprogrammsteuerung der Ausgangsfrequenz verwendet. Der Mikrokontroller enthält einen elektrisch löschbaren, programmierbaren Nur-Lese-Speicher (EEPROM) zum Speichern des Nullpunkts und anderer Kalibrierungswerte. Solche Kalibrierungswerte können während der Kalibrierung eines fertigen Anzeigers oder Moduls programmiert oder am Einsatzort unter Verwendung eines standardmäßigen PC programmiert werden.

Ein weiterer Aspekt der Erfindung ist ein Nullschaltereingang, in dem während der Einschaltsequenz der Mikrokontroller die Spannung aus dem Sensor speichert, die vom ADC gelesen wird, um die Nullposition (Nullgeschwindigkeit) anzuzeigen, und die Nulldaten als Bezug in einem nichtflüchtigen Speicher sichert. Die Null- oder Kalibrierungsprozedur findet automatisch bei jedem Einschalten des Moduls statt, wenn das Nulleingangssignal jedoch nicht erkannt wird, werden die gewonnenen Daten nicht in dem nichtflüchtigen Speicher gesichert.

Zusätzlich dazu kann die Mikroprogrammsoftware bei einer alternativen Ausführungsform spezielle Filteralgorithmen enthalten, die ankommende Sensordaten verarbeiten, um unter vielfältigen Betriebsbedingungen ein glattes Ansprechverhalten zu erzielen. Weitere alternative Ausführungsformen können u.a. die folgenden Merkmale enthalten: einen Ausgangstreiber für Warnlampen, LEDs oder externe Relais, zusätzliche analoge A/D-Eingänge, die für vom Benutzer einstellbare Warn-/Alarmschwellen verwendet werden können, das Speichern fester Warn-/Alarmschwellen im EEPROM, elektronische Kalibrierungen der Anzeige Null, Meßbereichs- und Skalenanpassung, das Integrieren eines Basis-PC-Bord-Entwurfs für alle Anzeiger und ein mögliches Multiplexen von Sensordaten auf einen Datenbus unter Verwendung standardmäßiger Sensoren, um ein Modul mit 5-8 A/D-Eingängen und eine Anzahl von Statuseingängen zu erhalten.

Diese und andere Merkmale und Vorteile der Erfindung werden bei Durchsicht der folgenden ausführlichen Beschreibung der bevorzugten Ausführungsformen der Erfindung in Verbindung mit den angefügten Zeichnungen deutlich.

Figur 1 ist ein Blockschaltbild eines Geräts, in dem gemäß einer bevorzugten Ausführungsform der vorliegenden Erfindung ein nichtlineares Eingangssignal als eine lineare Frequenz ausgegeben wird.

Figur 2 ist ein Flußdiagramm der Umsetzung von dem nichtlinearen Eingangssignal in lineare Frequenz gemäß einer bevorzugten Ausführungsform der vorliegenden Erfindung.

Figur 3 ist ein Flußdiagramm der Interrupt-Routine, die bei der Umsetzung von dem nichtlinearen Eingangssignal in die lineare Frequenz gemäß einer bevorzugten Ausführungsform der vorliegenden Erfindung verwendet wird.

Figur 4 ist ein Flußdiagramm der Nullroutine, mit der der Nullwert beim Einschalten des Sensors gewonnen wird.

Figur 5 ist ein Flußdiagramm der Sensorerkennungsschleife, die verwendet wird, wenn beim Einschalten des Systems kein Sensor vorhanden ist.

Figur 6 ist ein Flußdiagramm der LED-Routine, die zur Steuerung des Betriebs der in dem System verwendeten LED verwendet wird.

Figur 7 ist ein Flußdiagramm der Einstellpufferroutine, die zur Steuerung des Inhalts des Filterpuffers verwendet wird.

Figur 8 ist ein Flußdiagramm der Filterroutine, die zum Mitteln der Meßwerte aus dem Analog/Digital-Umsetzer verwendet wird.

Figur 9 ist ein Flußdiagramm der Analog/Digital-Umsetzerroutine, die zum Lesen von Informationen aus dem Analog/Digital-Umsetzer verwendet wird.

Obwohl die vorliegende Erfindung in verschiedenen Formen ausgeführt werden kann, wird eine zur Zeit bevorzugte Ausführungsform in den Zeichnungen gezeigt und im folgenden beschrieben, wobei es sich jedoch versteht, daß die vorliegende Offenlegung nur als ein Beispiel der Erfindung betrachtet werden soll und es nicht beabsichtigt ist, die Erfindung auf die dargestellte spezifische Ausführungsform zu beschränken.

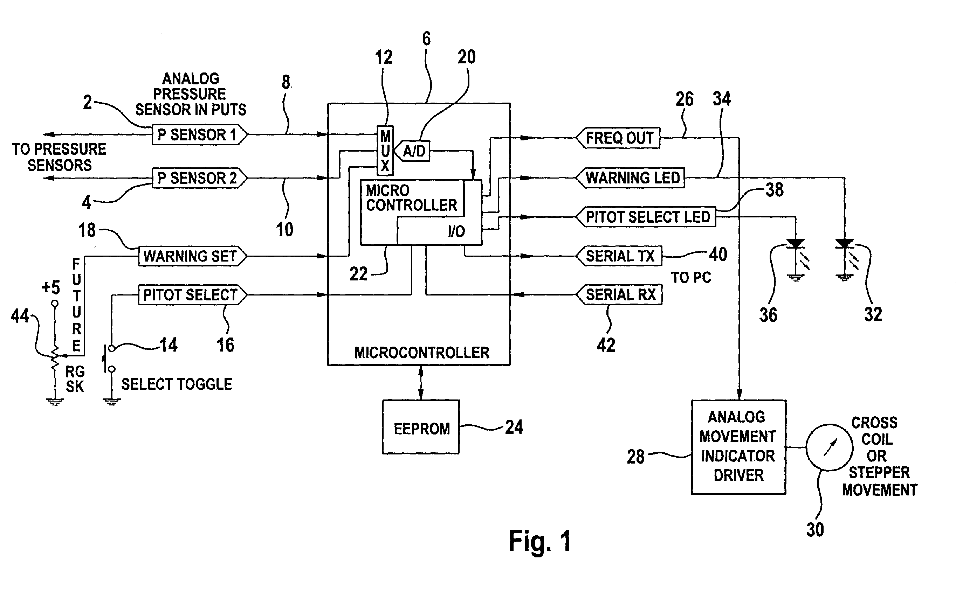

Mit Bezug auf Figur 1 ist ein Blockschaltbild einer bevorzugten Ausführungsform eines Systems gezeigt, in dem ein nichtlineares Eingangssignal als eine lineare Frequenz ausgegeben wird. In einem Ausführungsbeispiel wird dieses System in einer Marinenumgebung zur Messung der Geschwindigkeit verwendet, es kann aber auch in jeder beliebigen Anwendung verwendet werden, bei der eine Druckmessung vorgenommen wird und ein Ausgangssignal erwünscht ist. Mindestens ein und vorzugsweise zwei Drucksensoren 2 und 4 sind über Übertragungsleitungen 8 bzw. 10 mit einem Mikrokontrollerchip 6 verbunden. Diese Drucksensoren 2 und 4 sind bei der bevorzugten Ausführungsform Pitot-Staudüsen. Die Meßwerte aus den Drucksensoren 2 und 4 werden in den in dem Mikrokontrollerchip 6 enthaltenen Multiplexer 12 eingegeben. Dieser Multiplexer sendet das Signal aus Sensor 2 oder 4 auf der Grundlage von Eingaben entweder von dem Mikrokontroller 22 oder von der (nicht gezeigten) Bedienungsperson, die den Umschalter 14 zur Erzeugung eines Drucksensorauswahlsignals 16 aktiviert. Der Multiplexer kann außerdem bei einer alternativen Ausführungsform der Erfindung ein Eingangssignal aus einer Warnmenge 18 aufweisen. Jeder beliebige Wert im Eingangssignalumfang kann als eine Schwelle im EEPROM 24 für eine Warnmenge gespeichert werden. Wenn der Eingangswert die Schwelle überschreitet, wird die Warnanzeige eingeschaltet.

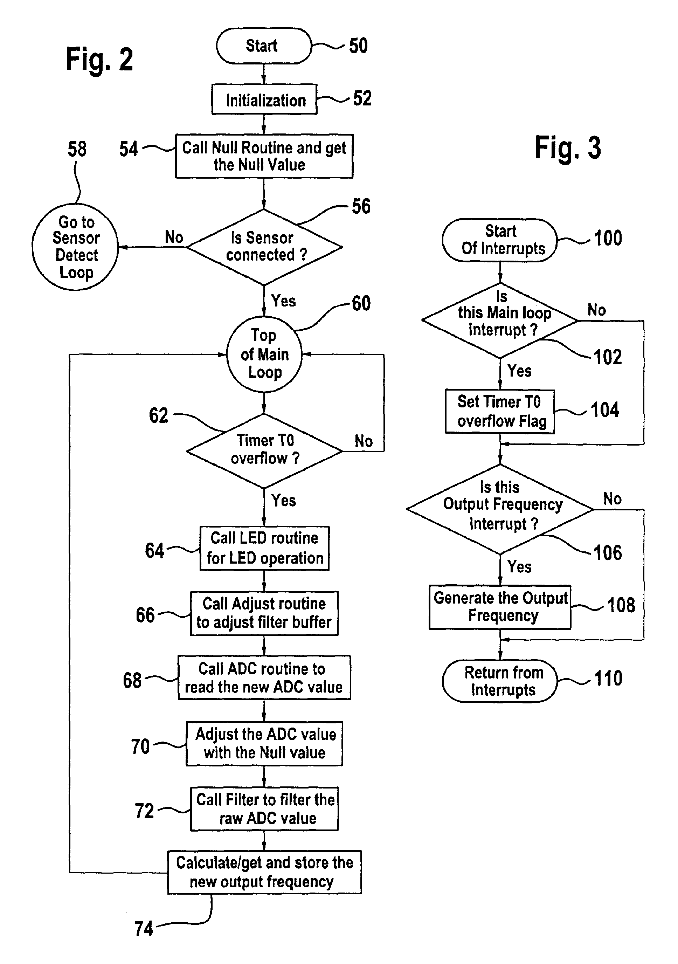

Der Multiplexer 12 sendet das Signal aus dem gewählten Drucksensor 2 oder 4 zu dem ADC 20, in dem das Signal von einem Analogsignal in ein Digitalsignal umgesetzt wird. Dieses Digitalsignal wird dann von dem ADC 20 zu dem Mikrokontroller 22 gesendet. Der Mikrokontroller führt dann die Berechnung zur Umsetzung des nichtlinearen Digitalsignals in ein lineares Frequenzsignal durch, das auf einem standardmäßigen Geschwindigkeitsmesser oder einem anderen Anzeiger angezeigt werden kann. Diese Umsetzung wird ausführlicher unter Bezugnahme auf Figur 2-9 erläutert. Als Teil der Berechnung bezieht sich der Mikrokontroller auf Informationen, die im EEPROM 24 gespeichert sind. Der EEPROM 24 kann entweder ein integraler Bestandteil des Mikrokontrollerchips 6 oder ein separates Bauteil sein. Die Informationen auf dem EEPROM 24 können einen Nullpunktbezugswert und andere Kalibrierungswerte umfassen. Der EEPROM 24 kann außerdem feste Warn-/Alarmschwellen speichern.

Die lineare Ausgangsfrequenz des Mikrokontrollerchips 6 wird dann über eine Übertragungsleitung 26 zu dem Analogbewegungsanzeigertreiber 28 gesendet, der wiederum über eine Kreuzspulen- oder Schrittbewegung den Linearskalenmesser 30 ansteuert. Da der Mikrokontroller 22 ein lineares Frequenzsignal an den Treiber 28 ausgibt, kann ein standardmäßiger Linearskalenmesser 30 verwendet werden, und die Bedienungsperson ist in der Lage, die lineare Darstellung des nichtlinearen Sensorausgangssignals abzulesen.

Die bevorzugte Ausführungsform enthält eine Warnanzeige-LED 32, so daß beim Auftreten bestimmter Zustände, in denen die Bedienungsperson gewarnt werden soll, der Mikrokontroller 22 ein Signal sendet, das über die Übertragungsleitung 34 die Warn-LED 32 einschaltet. Wie oben beschrieben, kann jeder beliebige Wert im Eingangssignalumfang als eine Schwelle im EEPROM 24 für eine Warnmenge gespeichert werden. Zum Beispiel kann ein Geschwindigkeitswarnanzeiger verwendet werden, so daß eine LED aufleuchtet, wenn eine bestimmte Geschwindigkeit überschritten wird. Zusätzlich ist eine zweite LED 36 vorhanden, um anzuzeigen, welcher der Drucksensoren 2 oder 4 betrieben wird, wenn entweder der Mikrokontroller 22 oder die Bedienungsperson zwischen den beiden Drucksensoren 2 und 4 umschaltet. Diese LED wird außerdem über die Übertragungsleitung 38 durch ein Signal aus dem Mikrokontroller 22 gesteuert.

Bei einer bevorzugten Ausführungsform enthält der Warnanzeigeregler mit einem vom Benutzer einstellbaren Warnanzeiger ein Potentiometer 44. Das Potentiometer 44 wird zum Einstellen eines Spannungswerts im Bereich von 0 bis 5 Volt verwendet, der durch den Multiplexer 12 an einen Kanal des ADC 20 angelegt wird. Durch Verwendung einer vorbestimmten Sequenz von Betätigungen des Umschalters 14 wird der Potentiometerspannungswert anstelle des Sensorspannungswerts gewählt. Dadurch kann das Potentiometer 44 den Anzeiger auf den für die Warnanzeige erforderlichen Einstellungspunkt verschieben. Der Einstellpunktspannungswert wird durch den ADC 20 in einen Digitalwert umgesetzt und unter Verwendung des Umschalters 14 in dem EEPROM 24 gespeichert. Nach dem Speichern des Spannungswerts kehrt das System zum normalen Betrieb zurück. Wenn der Eingangswert aus dem Sensor den durch das Potentiometer eingestellten Wert überschreitet, wird der Warnanzeiger eingeschaltet. Der Einstellpunkt für die Warnung kann so konfiguriert werden, daß entweder bei einem ansteigenden Wert oder bei einem abfallenden Wert gewarnt wird. Zum Beispiel kann eine Warnung auf der Grundlage eines ansteigenden Werts für eine Geschwindigkeitsüberschreitung und eine Warnung auf der Grundlage eines abfallenden Werts für das Abfallen des Drucks aus dem Sensor unter einen Einstellwert verwendet werden.

Der Mikrokontrollerchip 6 enthält eine serielle Ausgangsleitung 40 und eine serielle Eingangsleitung 42. Die seriellen Leitungen 40 und 42 ermöglichen eine Verbindung des Mikrokontrollerchips 6 mit einem (nicht gezeigten) PC, um die Kalibrierung und andere Operationen an dem System durchzuführen, sowie Informationen in den EEPROM 24 einzugeben. Die PC-Schnittstelle dient zum Überschreiben oder Voreinstellen von Daten im EEPROM 24.

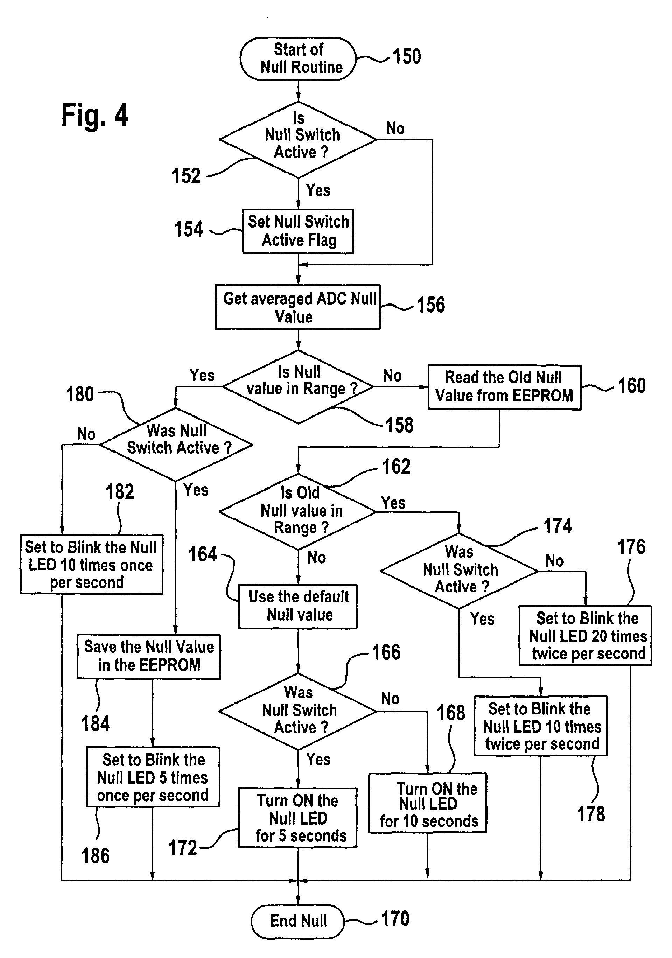

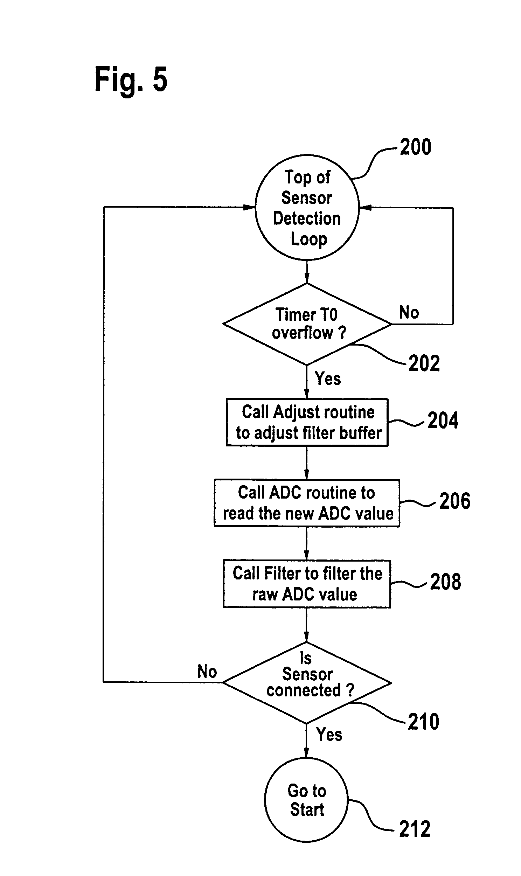

Nunmehr unter Bezugnahme auf Figur 2 (unter weiterer Bezugnahme auf Figur 1) ist ein Flußdiagramm der Umsetzung von einem nichtlinearen Eingangssignal in eine lineare Frequenz gemäß einer bevorzugten Ausführungsform der vorliegenden Erfindung gezeigt. Im Startschritt 50 wird das System eingeschaltet und die Umsetzungsroutine beginnt. Im Schritt 52 wird das System initialisiert, und im Schritt 54 ruft der Mikrokontroller 22 die Nullroutine ab, die unter Bezugnahme auf Figur 4 beschrieben wird, und ruft dann den Nullwert aus dem EEPROM 24 ab, nachdem die Nullroutine ausgeführt wurde. Nachdem das System die Nullroutine ausgeführt und den Nullwert abgerufen hat, bestimmt das System, ob ein Sensor angeschlossen ist (Schritt 56). Wenn kein Sensor erkannt wird, ruft das System die Sensorerkennungsschleife auf (Schritt 58), die ausführlicher mit Bezug auf Figur 5 beschrieben wird. Wenn Schritt 56 zeigt, daß ein Sensor angeschlossen ist, springt das System zum Start der Hauptschleife (Schritt 60).

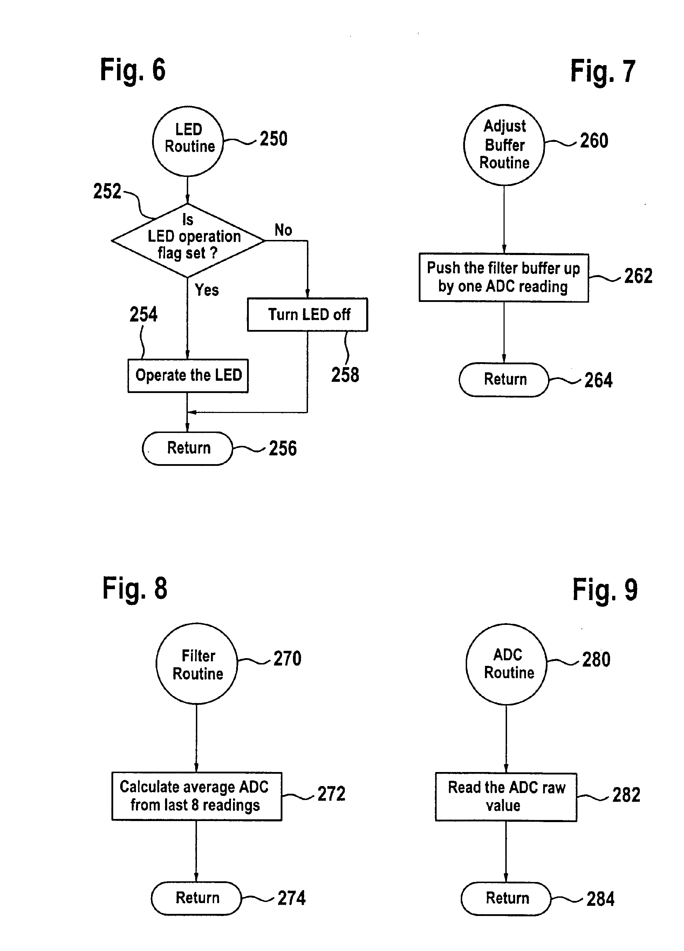

Die Hauptschleife des Systems beginnt mit der Bestimmung, ob der Timer T0 im Überlauf-Zustand ist (Schritt 62). Bei der bevorzugten Ausführungsform geht der Timer T0 alle 8,2 Millisekunden in den Überlauf-Zustand. Wenn sich der Timer T0 nicht im Überlauf-Zustand befindet, ist das System nicht zur Ausführung der Hauptschleife vorbereitet, und das System kehrt zum Anfang der Hauptschleife 60 zurück. Wenn sich der Timer T0 jedoch im Überlauf-Zustand befindet, ist das System bereit, die Hauptschleife auszuführen, und das System ruft die LED-Routine auf (Schritt 64), die ausführlicher mit Bezug auf Figur 6 beschrieben wird. Somit dient der Timer T0 dazu, sicherzustellen, daß die Hauptschleife alle 8,5 Millisekunden ausgeführt wird. Nachdem die Steuerung aus der LED-Routine wieder an die Hauptschleife zurückgegeben wird, wird die Puffereinstellroutine aufgerufen (Schritt 66), die ausführlicher mit Bezug auf Figur 7 beschrieben wird. Nachdem die Steuerung von der Puffereinstellroutine an die Hauptschleife zurückgegeben wurde, wird die ADC-Routine aufgerufen (Schritt 68), die ausführlicher in bezug auf Figur 9 beschrieben wird. Die ADC-Routine kehrt mit dem aktuellen ADC-Rohwert zurück, und das System stellt den ADC-Wert mit dem Nullwert ein (Schritt 70). Danach ruft das System die Filterroutine auf (Schritt 72), die ausführlicher in bezug auf Figur 8 beschrieben wird.

Die Filterroutine gibt einen gefilterten ADC-Wert an die Hauptschleife zurück, und das System berechnet dann eine neue Ausgangsfrequenz und speichert diese (Schritt 74). Die Frequenzberechnung basiert auf der Formel: Druck = (Geschwindigkeit/8,208)^2. Nach dem Berechnen und Speichern der neuen Ausgangsfrequenz kehrt das System zum Anfang der Hauptschleife zurück (Schritt 60) und wiederholt die Schritte 62 bis 74, so wie es bereits beschrieben wurde.

Nunmehr unter Bezugnahme auf Figur 3 ist ein Flußdiagramm der verwendeten Interrupt-Routine gezeigt. Die Interrupt-Routine unterbricht das System in einer von zwei Situationen. Erstens ist das Hauptschleifen-Interrupt ein timergestütztes Interrupt, das erzeugt wird, wenn der 8-Bit-Timer T0 überläuft. Zweitens ist das Ausgangsfrequenz-Interrupt ein timergestütztes Interrupt, das erzeugt wird, wenn der 16-Bit-Timer T1 überläuft. Wie bereits beschrieben, wird mit dem Timer T0 sichergestellt, daß die Hauptschleife alle 8,5 Millisekunden ausgeführt wird. Der Timer T1 dient zur Erzeugung der Ausgangsfrequenz unter Verwendung berechneter Werte.

Die Interrupt-Routine beginnt im Schritt 100. Das System bestimmt, ob das Hauptschleifen-Interrupt angefordert wurde (Schritt 102). Wenn das Hauptschleifen-Interrupt angefordert wurde, wird das Hauptschleifen-Flag gesetzt (Schritt 104), und das System bestimmt dann, ob das Ausgangsfrequenz-Interrupt angefordert wurde (Schritt 106). Wenn das System bestimmt, daß das Hauptschleifen-Interrupt nicht angefordert wurde (Schritt 102), dann schreitet das System direkt zum Schritt 106 weiter. Wenn das System bestimmt, daß das Ausgangsfrequenz-Interrupt angefordert wurde, erzeugt das System die Ausgangsfrequenz (Schritt 108). Nachdem die Ausgangsfrequenz erzeugt wurde, kehrt das System aus der Interrupt-Routine zurück (Schritt 110). Wenn das System im Schritt 106 bestimmt, daß das Ausgangsfrequenz-Interrupt nicht angefordert wurde, kehrt das System aus der Interrupt-Routine zurück (Schritt 110).

Nunmehr unter Bezugnahme auf Figur 4 beginnt, wenn das System die Nullroutine aufruft, um den Nullwert zu erhalten (Schritt 54), die Nullroutine im Schritt 150. Das System bestimmt zunächst, ob der Nullschalter aktiv ist (Schritt 152). Wenn der Nullschalter aktiv ist, setzt das System das Nullschalter-Aktiv-Flag (Schritt 154) und geht zum Schritt 156 über. Wenn der Nullschalter nicht aktiv ist, schreitet das System direkt von Schritt 152 zu Schritt 156 weiter. Im Schritt 156 ruft das System den gemittelten ADC-Nullwert ab.

Danach bestimmt das System im Schritt 158, ob der ADC-Nullwert innerhalb des Bereichs liegt (innerhalb der Toleranz des Sensornullwerts). Wenn der ADC-Nullwert nicht im Bereich liegt, ruft das System den vorherigen Nullwert aus dem EEPROM 24 ab (Schritt 160). Danach bestimmt das System, ob der vorherige ADC-Nullwert im Bereich liegt (Schritt 162). Wenn der vorherige ADC-Nullwert nicht im Bereich liegt, ruft das System den Vorgabe-Nullwert ab (Schritt 166). Danach bestimmt das System, ob der Nullschalter aktiv ist (Schritt 166). Wenn der Nullschalter nicht aktiv ist, schaltet das System 10 Sekunden lang die Null-LED 36 ein (Schritt 168) und die Nullroutine endet im Schritt 170 und kehrt zum Schritt 54 der Hauptschleife in Figur 2 zurück. Wenn der Nullschalter aktiv war, schaltet das System die Null-LED 36 5 Sekunden lang ein (Schritt 168) und die Nullroutine endet im Schritt 170 und kehrt zum Schritt 54 der Hauptschleife in Figur 2 zurück.

Wenn das System im Schritt 162 bestimmt, daß der vorherige ADC-Nullwert im Bereich liegt, dann bestimmt das System, ob der Nullschalter aktiv ist (Schritt 174). Wenn der Nullschalter nicht aktiv ist, läßt das System die Null-LED 36 zwanzigmal zweimal pro Sekunde blinken (Schritt 176) und die Nullroutine endet im Schritt 170 und kehrt zum Schritt 54 der Hauptschleife in Figur 2 zurück. Wenn der Nullschalter aktiv war, läßt das System die Null-LED 36 zehnmal zweimal pro Sekunde blinken (Schritt 176) und die Nullroutine endet im Schritt 178 und kehrt zum Schritt 54 der Hauptschleife in Figur 2 zurück.

Wenn das System im Schritt 158 bestimmt, daß der ADC-Nullwert im Bereich liegt, dann bestimmt das System, ob der Nullschalter aktiv ist (Schritt 180). Wenn der Nullschalter nicht aktiv ist, läßt das System die Null-LED 36 zehnmal einmal pro Sekunde blinken (Schritt 182) und die Nullroutine endet im Schritt 170 und kehrt zum Schritt 54 der Hauptschleife in Figur 2 zurück. Wenn der Nullschalter aktiv war, läßt das System die Null-LED 36 fünfmal einmal pro Sekunde blinken (Schritt 186) und die Nullroutine endet im Schritt 170 und kehrt zum Schritt 54 der Hauptschleife in Figur 2 zurück. Somit kehrt die Nullroutine mit einem im Bereich liegenden Nullwert zur Hauptschleife zurück, wobei es sich um den ADC-Nullwert, den vorherigen ADC-Nullwert oder den Vorgabe-Nullwert handeln kann.

Nunmehr unter Bezugnahme auf Figur 5 ist ein Flußdiagramm der Sensorerkennungsschleife gezeigt. Die Sensorerkennungsschleife wird von der Hauptschleife im Schritt 58 aufgerufen, wenn das System bestimmt, daß beim Einschalten kein Sensor angeschlossen ist (Schritt 56). Die Sensorerkennungsschleife beginnt im Schritt 200. Die Schleife bestimmt, ob sich der Timer T0 im Überlauf-Zustand befindet (Schritt 202). Wenn sich der Timer T0 nicht im Überlauf-Zustand befindet, kehrt die Schleife zum Beginn der Sensorerkennungsschleife zurück (Schritt 200). Wenn sich der Timer T0 im Überlauf-Zustand befindet, wird die Puffereinstellroutine aufgerufen (Schritt 204), die ausführlicher in bezug auf Figur 7 gezeigt ist. Nachdem die Steuerung von der Puffereinstellroutine an die Sensorerkennungsschleife zurückgegeben wurde, wird die ADC-Routine aufgerufen (Schritt 206), die ausführlicher mit Bezug auf Figur 9 beschrieben wird. Danach ruft die Schleife die Filterroutine auf (Schritt 208), die ausführlicher in bezug auf Figur 8 beschrieben wird.

Die Filterroutine gibt einen gefilterten ADC-Wert an die Sensorerkennungsschleife zurück, und die Schleife bestimmt dann, ob ein Sensor angeschlossen ist (Schritt 210). Wenn kein Sensor angeschlossen ist, kehrt die Schleife zum Anfang zurück (Schritt 200). Wenn jedoch ein Sensor angeschlossen ist, dann führt die Schleife im Schritt 212 das System zum Anfang der Hauptschleife zurück (Schritt 50).

Nunmehr unter Bezugnahme auf Figur 6 ist ein Flußdiagramm der LED-Routine gezeigt. Die LED-Routine wird von der Hauptschleife aufgerufen (Schritt 64). Die LED-Routine beginnt im Schritt 250. Die Routine bestimmt, ob das LED-Betriebs-Flag gesetzt ist (Schritt 252). Wenn das LED-Betriebs-Flag gesetzt ist, aktiviert das System die LED (Schritt 254) und kehrt dann zum Schritt 64 der Hauptschleife zurück (Schritt 256). Wenn das LED-Betriebs-Flag nicht gesetzt ist, schaltet das System die LED aus (Schritt 258) und kehrt dann zum Schritt 64 der Hauptschleife zurück (Schritt 256).

Nunmehr unter Bezugnahme auf Figur 7 ist ein Flußdiagramm der Puffereinstellroutine gezeigt. Die Puffereinstellroutine beginnt im Schritt 260 nach einem Aufruf im Schritt 66 der Hauptschleife oder im Schritt 204 der Sensorerkennungsschleife. Die Routine aktualisiert den Filterpuffer um einen ADC-Meßwert (Schritt 262), und die Routine kehrt vom Schritt 264 zum Schritt 66 der Hauptschleife oder am Schritt 204 der Sensorerkennungsschleife zurück.

Nunmehr unter Bezugnahme auf Figur 8 ist ein Flußdiagramm der Filterroutine gezeigt. Die Filterroutine beginnt im Schritt 270 nach einem Aufruf im Schritt 72 der Hauptschleife oder am Schritt 208 der Sensorerkennungsschleife. Die Routine berechnet den Mittelwert der letzten acht Meßwerte des ADC (Schritt 272) und die Routine kehrt vom Schritt 274 zum Schritt 72 der Hauptschleife oder am Schritt 208 der Sensorerkennungsschleife zurück.

Nunmehr unter Bezugnahme auf Figur 9 ist ein Flußdiagramm der ADC-Routine gezeigt. Die ADC-Routine beginnt im Schritt 280 nach einem Aufruf im Schritt 68 der Hauptschleife oder am Schritt 206 der Sensorerkennungsschleife. Die Routine liest den ADC-Rohwert (Schritt 282), und die Routine kehrt dann vom Schritt 284 zum Schritt 68 der Hauptschleife oder am Schritt 206 der Sensorerkennungsschleife zurück.

Für Fachleute ist ohne weiteres erkennbar, daß die Umsetzung von nichtlinearem Sensor zu linearem Anzeiger der vorliegenden Erfindung in vielfältigen Anwendungen verwendet werden kann, darunter u.a. die Bestimmung der Geschwindigkeit eines Wasserfahrzeugs.

Die obige Beschreibung einer bevorzugten Ausführungsform der Erfindung wurde lediglich als Beispiel und Beschreibung angeführt und soll die Erfindung nicht erschöpfen oder auf die genaue offengelegte Form beschränken. Die Beschreibung wurde gewählt, um die Prinzipien der Erfindung und ihre praktische Anwendung am besten zu erläutern, damit Fachleute die Erfindung in verschiedenen Ausführungsformen und verschiedenen Modifikationen, die an die konkrete in Betracht gezogene Verwendung angepaßt sind, am besten verwenden können. Es versteht sich, daß der Gedanke und Schutzumfang der Erfindung lediglich durch die folgenden Ansprüche, einschließlich aller Äquivalente, definiert werden.

## Patentansprüche

1. Gerät zur Messung des Drucks und Ausgabe eines linearen Signals, das den Druck darstellt, umfassend:
mindestens einen Drucksensor mit einer Ausgabe eines nichtlinearen Analogsignals;
einen Analog/Digital-Umsetzer mit einem mit dem Ausgang des mindestens einen Drucksensors gekoppelten Eingang und einer Ausgabe eines Digitalsignals;
einen Mikrokontroller mit einem an den Ausgang des Analog/Digital-Umsetzers angekoppelten Ausgang und einer Ausgabe eines linearen Frequenzsignals; und
einen Anzeiger mit einem an den Ausgang des Mikrokontrollers angekoppelten Eingang und einer Anzeige zur Anzeige einer Darstellung des Ausgangssignals des Drucksensors.

2. Gerät nach Anspruch 1 mit mindestens zwei Drucksensoren, wobei die Ausgänge der Drucksensoren mit Eingängen eines Multiplexers mit einem einzigen Ausgang gekoppelt sind und der Ausgang des Multiplexers mit dem Analog/Digital-Umsetzer gekoppelt ist.

3. Gerät nach Anspruch 1, wobei der Mikrokontroller das Ausgangssignal des Analog/Digital-Umsetzers unter Verwendung einer Nachschlagetabelle in eine lineare Frequenz umsetzt.

4. Gerät nach Anspruch 1, wobei der mindestens eine Drucksensor eine Pitot-Staudüse umfaßt.

5. Gerät nach Anspruch 1, weiterhin mit einer oder mehreren Leuchtdioden, die aufleuchten, wenn der Mikrokontroller vorbestimmte Schwellenalarmpegel erkennt.

6. Gerät nach Anspruch 2, wobei der Multiplexer durch den Mikrokontroller gesteuert wird.

7. Gerät nach Anspruch 2, weiterhin mit einem vom Benutzer bedienbaren Schalter zur Steuerung des Multiplexers.

8. Gerät zur Anzeige der Geschwindigkeit eines Wasserfahrzeugs, umfassend:
mindestens einen Drucksensor mit Ausgabe eines nichtlinearen Analogsignals, das dem Druck des in den Drucksensor eintretenden Wassers entspricht;
einen Analog/Digital-Umsetzer mit einem mit dem Ausgang des mindestens einen Drucksensors gekoppelten Eingang und einer Ausgabe eines Digitalsignals;
einen Mikrokontroller mit einem an den Ausgang des Analog/Digital-Umsetzers angekoppelten Eingang und einer Ausgabe eines linearen Frequenzsignals;
ein an den Mikrokontroller angekoppeltes Speichergerät; und
ein Anzeigegerät mit einem an den Ausgang des Mikrokontrollers angekoppelten Eingang und einer Anzeigeseite zur Anzeige einer Darstellung des Ausgangssignals des Drucksensors.

9. Gerät nach Anspruch 8 mit mindestens zwei Drucksensoren, wobei die Ausgänge der Drucksensoren mit den Eingängen eines Multiplexers mit einem einzigen Ausgang gekoppelt sind und der Ausgang des Multiplexers mit dem Analog/Digital-Umsetzer gekoppelt ist.

10. Gerät nach Anspruch 8, wobei der Mikrokontroller das Ausgangssignal des Analog/Digital-Umsetzers unter Verwendung einer Nachschlagetabelle, die in dem Speichergerät gespeichert ist, in eine lineare Frequenz umsetzt.

11. Gerät nach Anspruch 8, wobei in dem Speichergerät Schwellenalarmwerte, Kalibrierungswerte oder beide gespeichert sind.

12. Gerät nach Anspruch 8, wobei der mindestens eine Drucksensor eine Pitot-Staudüse umfaßt.

13. Gerät nach Anspruch 9, wobei der Multiplexer durch den Mikrokontroller gesteuert wird.

14. Gerät nach Anspruch 11, weiterhin mit einer oder mehreren Leuchtdioden, die aufleuchten, wenn die in dem Speichergerät gespeicherten vorbestimmten Schwellenalarmpegel überschritten werden.

15. Verfahren zur Umsetzung einer nichtlinearen Messung des Drucks in ein lineares Signal, das den Druck darstellt, umfassend:
Abrufen einer nichtlinearen analogen Druckmessung aus einer Pitot-Staudüse;
Umsetzen der nichtlinearen analogen Druckmessung in eine nichtlineare digitale Darstellung unter Verwendung eines Analog/Digital-Umsetzers;
Speichern der nichtlinearen digitalen Druckmessung; und
Berechnen einer linearen Ausgangsfrequenz, die die nichtlineare analoge Druckmessung darstellt.

16. Verfahren nach Anspruch 15, wobei die nichtlineare analoge Druckmessung mit der Geschwindigkeit eines Wasserfahrzeugs zusammenhängt.

17. Verfahren nach Anspruch 15, wobei der Schritt des Speicherns der nichtlinearen digitalen Druckmessung folgendes umfaßt:
Verschieben aller Werte in einem Filterpuffer um eine Speicherstelle, um eine Pufferspeicherstelle frei zu machen;
Abrufen des rohen nichtlinearen Digitalwerts aus dem Analog/Digital-Umsetzer;
Korrigieren des rohen nichtlinearen Digitalwerts um einen vorbestimmten Nullwert; und
Speichern des eingestellten nichtlinearen Digitalwerts in der freien Filterpufferspeicherstelle.

18. Verfahren nach Anspruch 17, weiterhin mit dem Schritt des Berechnens des Mittelwerts der acht vorherigen nichtlinearen Digitalwerte und des Speicherns des Mittelwerts in der freien Filterpufferspeicherstelle.

19. Verfahren nach Anspruch 15, weiterhin mit dem Schritt des Einstellens einer Anzeige eines Anzeigers relativ zu der linearen Ausgangsfrequenz.
